(19) **Europäisches Patentamt European Patent Office Office européen des brevets**

(11) **EP 4 624 647 A1**

(12) **EUROPEAN PATENT APPLICATION**
published in accordance with Art. 153(4) EPC

(43) Date of publication:
01.10.2025 Bulletin 2025/40

(21) Application number: 23894582.8

(22) Date of filing: 21.11.2023

(51) International Patent Classification (IPC):
*D04H 3/16* (2006.01)  *B01D 39/16* (2006.01)
*B32B 5/26* (2006.01)

(52) Cooperative Patent Classification (CPC):
B01D 39/16; B32B 5/26; D04H 3/16

(86) International application number:
PCT/JP2023/041793

(87) International publication number:
WO 2024/111577 (30.05.2024 Gazette 2024/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 24.11.2022 JP 2022187546

(71) Applicant: Kuraray Co., Ltd.
Kurashiki-shi, Okayama 710-0801 (JP)

(72) Inventors:
• MARUYAMA, Keisuke
  Saijo-shi, Ehime 793-8585 (JP)
• OBATA, Soichi
  Osaka-shi, Osaka 530-8611 (JP)
• SHIRAISHI, Ikuhisa
  Saijo-shi, Ehime 793-8585 (JP)

(74) Representative: Vossius & Partner
Patentanwälte Rechtsanwälte mbB
Siebertstrasse 3
81675 München (DE)

(54) **FIBER STRUCTURE, THREE-DIMENSIONAL FILTER, AND FILTRATION FILTER**

(57) Provided are a fiber structure and a three-dimensional filter using the same. The fiber structure (10) is a fiber structure comprising an opening portion (2) and a protrusion (8) protruding from the opening portion (2). The protrusion (8) includes a side wall portion (4) formed at a side surface, and a bottom portion (6) formed at a bottom surface. A depth (D) of a hollow portion (5) defined between the opening portion (2) and the bottom portion (6) is 5 to 75 mm.

Fig. 1

**Description**

CROSS REFERENCE TO THE RELATED APPLICATION

This application is based on and claims Convention priority to Japanese patent application No. 2022-187546, filed November 24, 2022, the entire disclosure of which is herein incorporated by reference as a part of this application.

BACKGROUND OF THE INVENTION

(Field of the Invention)

The present invention relates to a fiber structure having a protrusion protruding from an opening portion, and a three-dimensional filter using the same.

(Description of Related Art)

A fiber structure has countless minute gaps between fibers and therefore is used as a filter material which allows liquid or gas to pass through the gaps. In order to improve the filter function by increasing the surface area which is a filtration area, the fiber structure is worked into and used in various shapes.

For example, Patent Document 1 (Japanese Laid-open Utility Model Publication No. H5-44218) discloses a filter material formed by a non-woven fabric pleated with continuous annular pleat fold lines.

As an invention for increasing the surface area by a method other than pleating, for example, Patent Document 2 (Japanese Patent No. 5179939) discloses, as a fiber sheet made of a non-woven fabric, formed three-dimensionally to have a large surface area and having high form stability, a fiber structure including: a flat-plate net member (A) formed by filamentary bodies; and a non-woven fabric member (B) including a meshed base portion fused to the filamentary bodies, and a plurality of swelling portions swelling in a direction opposite to the meshed base portion at respective meshes of the flat-plate net member (A), wherein the average hole diameter of the meshes of the meshed base portion is 1 to 30 mm, the ratio of the average diameter of the filamentary bodies to the average hole diameter of the meshes of the meshed base portion, i.e., the average diameter of the filamentary bodies/the average hole diameter of the meshes, is 1/1 to 1/100, the average height of the swelling portions is 1.5 to 8 mm, the thickness of the swelling portions is 0.5 to 5 mm, the ratio of the average height to the thickness, i.e., the average height/the thickness, is 1.05/1 to 5/1, the ratio of the average height of the swelling portions to the average hole diameter of the meshes of the meshed base portion, i.e., the average height/the average hole diameter, is 1/5 to 2/1, the density of the meshed base portion is 0.05 to 0.5 $g/cm^3$, the density of the swelling portion is 0.001 to 0.2 $g/cm^3$, and the ratio of both densities, i.e., the meshed base portion/the swelling portion, is 3/1 to 50/1.

[Related Document]

[Patent Document]

[Patent Document 1] Japanese Laid-open Utility Model Publication No. H5-44218
[Patent Document 2] Japanese Patent No. 5179939

SUMMARY OF THE INVENTION

PROBLEMS TO BE SOLVED BY THE INVENTION

However, as for the pleated filter of Patent Document 1, pleating process not only reduce productivity, but pleating process is difficult to stabilize in terms of quality. As for the three-dimensional filter of Patent Document 2, the swelling portions are not deep enough considering the thickness of the swelling portions, and therefore, for use as a three-dimensional filter, there is room for improvement in the life of the filter.

Accordingly, an object of the present invention is to provide a fiber structure which has a protrusion having a hollow portion with a sufficient depth and can increase the life of, for example, a filter when used as a three-dimensional filter.

MEANS FOR SOLVING THE PROBLEMS

That is, the present invention may include the following aspects.

[Aspect 1]

A fiber structure including:

an opening portion; and
a protrusion protruding from the opening portion,
wherein the protrusion includes a side wall portion formed at a side surface, and a bottom portion formed at a bottom surface, and
a depth (D) of a hollow portion defined between the opening portion and the bottom portion in the protrusion is 5 to 75 mm (preferably 8 to 65 mm, more preferably 10 to 55 mm, and even more preferably 15 to 55 mm).

[Aspect 2]

The fiber structure according to aspect 1, wherein an area B of an ideal conic solid calculated on the basis of the depth (D) of the hollow portion and an area (R) of the opening portion is 550 to 8000 mm$^2$ (preferably 600 to 5000 mm$^2$ and more preferably 700 to 3000 mm$^2$).

[Aspect 3]

The fiber structure according to aspect 1 or 2, wherein a ratio (B/R) of an area B of an ideal conic solid calculated on the basis of the depth (D) of the hollow portion and an area (R) of the opening portion, to the area (R) of the opening portion, is 1.1 or greater (preferably 1.2 or greater, more preferably 1.3 or greater, and particularly preferably 1.4 or greater).

[Aspect 4]

The fiber structure according to any one of aspects 1 to 3, wherein an average area (R) of the opening portion is 200 mm$^2$ or larger (preferably 300 mm$^2$ or larger and more preferably 400 mm$^2$ or larger).

[Aspect 5]

The fiber structure according to any one of aspects 1 to 4, wherein a ratio (Tb/Ta) of a thickness Tb of the bottom portion to a thickness Ta of the opening portion is 20 to 500 (preferably 30 to 400).

[Aspect 6]

The fiber structure according to any one of aspects 1 to 5, wherein a ratio (Tb/D) of a thickness Tb of the bottom portion to a depth D of the hollow portion is 2 or smaller (preferably 1.5 or smaller).

[Aspect 7]

The fiber structure according to any one of aspects 1 to 6, wherein a ratio (D/H) of the depth D of the hollow portion to a height H of the protrusion is 0.35 to 0.99 (preferably 0.40 to 0.98).

[Aspect 8]

The fiber structure according to any one of aspects 1 to 7, wherein the protrusion is formed by a swelling portion.

[Aspect 9]

The fiber structure according to any one of aspects 1 to 8, further comprising a support formed by a filamentary body,
wherein the opening portion is supported by the support.

EP 4 624 647 A1

[Aspect 10]

The fiber structure according to any one of aspects 1 to 9, comprising a plurality of protrusions, wherein a number of the protrusions per 10000 mm$^2$ is 5 to 50 protrusions/ 10000 mm$^2$ (preferably 7 to 40 protrusions/10000 mm$^2$ and more preferably 8 to 30 protrusions/10000 mm$^2$).

[Aspect 11]

A three-dimensional filter comprising the fiber structure according to any one of aspects 1 to 10.

[Aspect 12]

A filtration filter comprising a module in which an end of the fiber structure according to any one of aspects 1 to 10 is fixed to a casing.

Singular forms used with the articles "a", "an", and "the" in the present specification are intended to encompass plural forms including "at least one", unless the content clearly indicates otherwise. The terms "and/or", "at least one", and "one or more" used in the present specification encompass any and all of combinations of the relevant items having been listed.

The present invention encompasses any combination of at least two features disclosed in the claims and/or the specification and/or the drawings. In particular, any combination of two or more of the appended claims should be equally construed as included within the scope of the present invention.

EFFECT OF THE INVENTION

According to the present invention, since the protrusion having the hollow portion with a specific depth is formed in the fiber structure, for example, in a case of using the fiber structure as a three-dimensional filter, the deposition amount of a filtered material can be increased thanks to the depth of the hollow portion, whereby the life of the filter can be prolonged.

BRIEF DESCRIPTION OF THE DRAWINGS

In any event, the present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. The drawings described below are schematic views and the sizes of parts in the drawings do not reflect the actual size ratios. Between different drawings, common components are denoted by like reference numerals and will not be repeatedly described.

[Fig. 1] Fig. 1 is a schematic enlarged sectional view for illustrating an opening portion and a protrusion of a fiber structure according to one aspect of the present invention.
[Fig. 2] Fig. 2 is a schematic enlarged perspective view for illustrating opening portions and protrusions of the fiber structure according to one aspect of the present invention.
[Fig. 3] Fig. 3 is a schematic enlarged perspective view for illustrating an ideal conic solid having a hollow portion in the fiber structure shown in Fig. 2.
[Fig. 4] Fig. 4 is a schematic perspective view showing the fiber structure according to one aspect of the present invention.
[Fig. 5] Fig. 5 is a schematic enlarged plan view for illustrating opening portions of the fiber structure according to one aspect of the present invention.
[Fig. 6] Fig. 6 is a schematic enlarged perspective view for illustrating a melt-blowing formation method for a fiber structure according to one aspect of the present invention.
[Fig. 7] Fig. 7 is an electron microscope image of a cross section of a fiber structure obtained in Example 1 in the thickness direction.

DESCRIPTION OF EMBODIMENTS

(Fiber Structure)

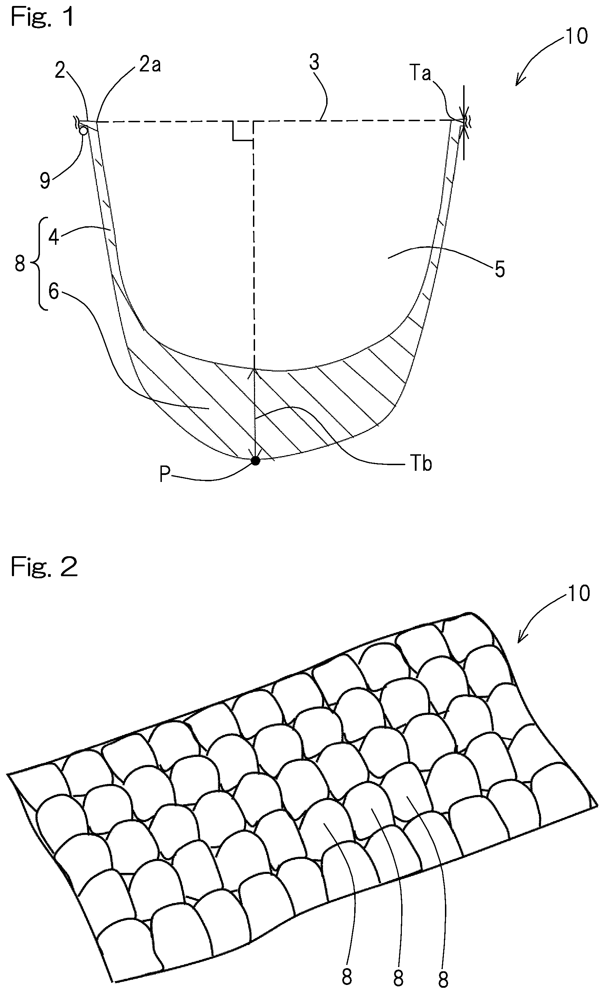

A fiber structure according to one aspect of the present invention includes an opening portion and a protrusion

4

protruding from the opening portion. Fig. 1 is a schematic enlarged sectional view for illustrating an opening portion and a protrusion in a fiber structure according to one aspect. The fiber structure 10 includes an opening portion 2, and a protrusion 8 extending from an opening end 2a of the opening portion 2.

In Fig. 1, the protrusion 8 includes a side wall portion 4 extending downward from the opening end 2a as an upper end, and a bottom portion 6 formed contiguously from the side wall portion 4, and has a hollow portion 5 defined inside the protrusion 8. An open area of the opening portion 2 shown by a dotted line may be referred to as a top face 3.

Fig. 2 shows a schematic perspective view of the fiber structure 10 in which a plurality of protrusions 8 are formed adjacently to one another, as seen from the protrusion side. In Fig. 2, for the purpose of illustrating the state of the protrusions, the plurality of protrusions 8 of the fiber structure 10 are shown in a state of protruding upward. In each protrusion 8 in the fiber structure 10, a hollow portion (not shown) with a predetermined depth is formed.

Fig. 1 is a view showing one protrusion 8 taken out from the fiber structure 10 in which the plurality of protrusions 8 are formed adjacently to each other as shown in Fig. 2. At the opening portion 2, the boundary with the adjacent protrusions is shown by wavy lines.

Since the side wall portion 4 and the bottom portion 6 are formed contiguously to each other, it may be difficult to clearly distinguish the boundary between the side wall portion 4 and the bottom portion 6. In this case, a part extending contiguously from the opening end 2a may be determined as a representative part of the side wall portion 4, and a part forming a bottom of the protrusion 8 may be determined as a representative part of the bottom portion 6.

The opening portion 2 has a thickness Ta. The bottom portion 6 has a thickness Tb. The thickness Tb of the bottom portion 6 is a value obtained by, using a caliper, measuring the thickness of the protrusion at the thickest part on a line extending perpendicularly from the apex P of the protrusion to the top face 3, the apex P being defined as a most swelling point of the protrusion in a cross section at which the protrusion is divided into equal halves along a plane including a center point of the opening portion.

The opening portion 2 may be supported by a support 9. In Fig. 1, a support 9 on the right side is not shown and only a support on the left side is shown. When the support 9 is present, the support 9 may preferably be adhered or fused to at least a part of the opening portion 2.

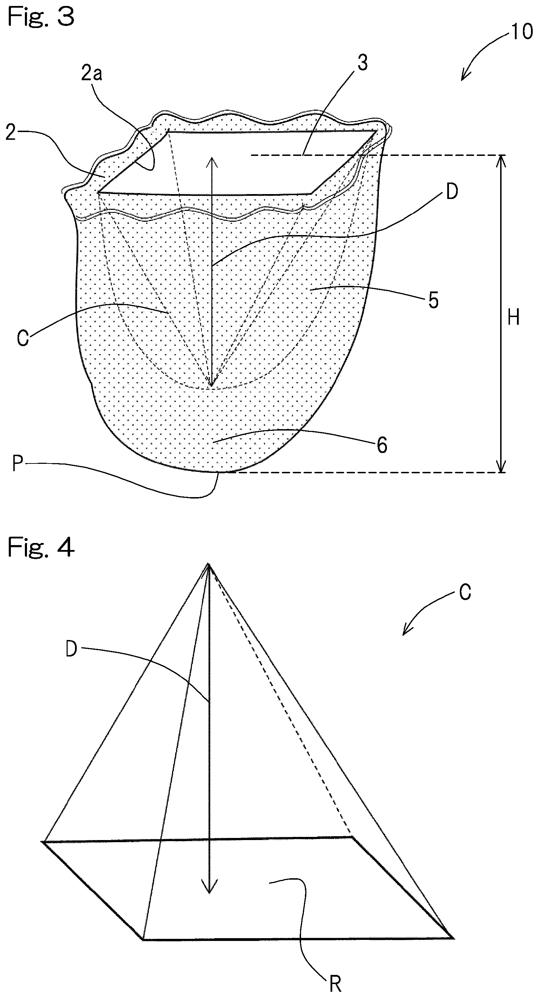

Fig. 3 is a schematic enlarged perspective view for illustrating the opening portion 2 and the protrusion 8 in the fiber structure according to one aspect. Fig. 3 is a view showing a part taken out from the plurality of protrusions 8 arranged adjacently to each other, and at the opening portion 2, the boundary with the adjacent protrusions is shown by wavy lines.

The protrusion 8 has the hollow portion 5 with a depth D, above the bottom portion 6. Here, in order to facilitate evaluation of the hollow portion 5 of the protrusion 8, an ideal conic solid C is depicted as a virtual figure by a dotted line in the protrusion 8 in Fig. 3, the ideal conic solid having the top face 3 of the opening portion 2 as a base and the depth D of the hollow portion 5 as a height.

The depth D of the hollow portion 5 shown in Fig. 3 is a depth at which a caliper inserted from the top face 3 of the opening portion 2 comes into contact with fiber forming the bottom portion. For example, in a case where the bottom portion of the protrusion is formed by a plurality of fiber layers, the depth D is a distance from the top face 3 of the opening portion to a bottom surface of the fiber layer located closest to the opening side.

Meanwhile, the height H of the protrusion 8 is a distance from the top face 3 of the opening portion 2 to the apex P of the protrusion 8. For example, in a case where the bottom portion of the protrusion is formed by a plurality of fiber layers, the apex P of the protrusion is present at the fiber layer farthest from the opening portion, and the height H is a distance from the top face 3 of the opening portion to the apex P.

Fig. 4 is a schematic perspective view for illustrating the ideal conic solid C taken out from Fig. 3. The ideal conic solid C is a conic solid having an area R of the base at the top face 3 of the opening portion 2 and a height D. By using the volume of the ideal conic solid shown in Fig. 4 or the area of the side wall of the ideal conic solid, the hollow portion of the fiber structure can be evaluated.

The shape of the protrusion can be determined as appropriate in accordance with a purpose or a manufacturing method, as long as the protrusion has a hollow portion with a sufficient depth. For example, in Fig. 1, the protrusion is formed by a swelling portion that bulges out due to blowing processing when formed by a melt-blowing method. As used herein, the protrusion formed in a melt-blown non-woven fabric may be simply referred to as a swelling portion.

[Configuration of Fiber Structure]

(Depth of Hollow Portion)

The fiber structure includes one or a plurality of opening portions, and a protrusion or protrusions protruding from the opening portion or opening portions. In a case where the fiber structure has a plurality of protrusions, the depth of the hollow portion of each protrusion can be evaluated by the depth D.

The depth D of the hollow portion is 5 mm or greater and 75 mm or smaller. From the standpoint of increasing the volume of the hollow portion, the depth D may preferably be 8 mm or greater, more preferably 10 mm or greater, and even more preferably 15 mm or greater. Meanwhile, from the standpoint of enhancing shape stability of the hollow portion, the depth D may preferably be 65 mm or smaller and more preferably 55 mm or smaller. The details of the measurement method for the depth of the hollow portion are described in Examples described later.

In a case where the fiber structure has a plurality of protrusions, the depth of the hollow portion may be calculated as an average value of the depths of three protrusions at both ends and a center part on a line across the fiber structure.

In a case where the fiber structure has a plurality of protrusions, an in-plane density of the protrusions may be 5 to 50 protrusions/10000 mm$^2$, preferably 7 to 40 protrusions/10000 mm$^2$, and more preferably 8 to 30 protrusions/10000 mm$^2$, for example. The in-plane density of the protrusions can be calculated by 10000 ÷ area of a base portion (mm$^2$).

(Thickness of Bottom Portion)

The thickness Tb of the bottom portion measured in the protrusion cut in the thickness direction may be set in accordance with a purpose, and may be 0.5 mm or greater, preferably 1.0 mm or greater, and more preferably 2.0 mm or greater, for example. An upper limit of the thickness of the bottom portion may be set as appropriate in accordance with the size of the protrusion, and may be 30 mm or smaller, for example. Here, the thickness of the bottom portion is a value obtained by, using a caliper, measuring the thickness of the bottom portion at the thickest part on a line perpendicular to the top face 3 in a cross section at which the protrusion is divided into equal halves along a plane including a center point of the opening portion. The details of the measurement method for the thickness of the bottom portion are described in Examples described later.

(Ratio of Thickness Tb of Bottom Portion to Depth D of Hollow Portion)

In the protrusion, the bottom portion may preferably have a smaller thickness in relation to the depth of the hollow portion. To give an example, a ratio (Tb/D) of the thickness Tb of the bottom portion to the depth D of the hollow portion may be 2 or smaller and preferably 1.5 or smaller, for example. A lower limit value of the ratio Tb/D is not particularly limited, and may be about 0.01, for example.

(Ratio of Depth D of Hollow Portion to Height H of Protrusion)

A ratio of the depth D of the hollow portion to the height H of the protrusion may be 0.35 to 0.99 and preferably 0.40 to 0.98, for example.

(Thickness Ta of Opening)

The thickness Ta of the opening portion measured in the protrusion cut in the thickness direction may be set in accordance with a purpose, and may be about 0.01 to 0.5 mm, preferably about 0.05 to 0.3 mm, and more preferably about 0.1 to 0.2 mm, for example. Here, the thickness of the opening portion is an average value of values obtained by selecting five opening ends adjacent to the protrusions using an SEM and then measuring the thickness of each opening end through observation using the SEM.

(Width W of Opening Portion)

The width of the opening portion may be determined as appropriate in accordance with the size of the protrusion and a purpose. To give an example, the width of the opening portion may be selected from a range of about 10 to 100 mm, and may be about 13 to 70 mm and preferably about 15 to 40 mm, for example.

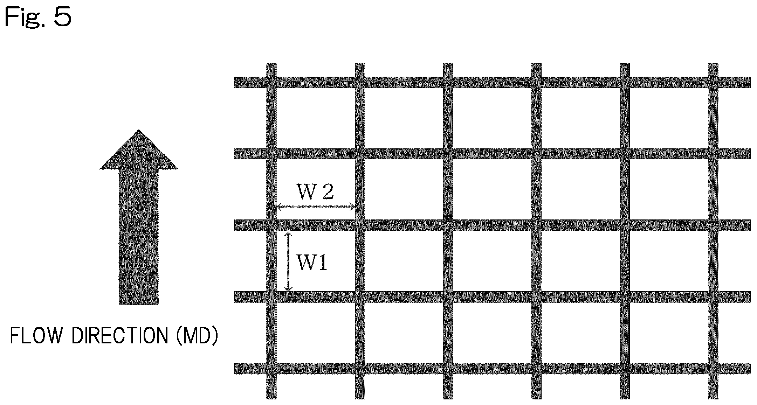

The width W of the opening portion can be measured using a caliper. For example, Fig. 5 shows a schematic enlarged plan view for illustrating the opening portions of the fiber structure. As shown in Fig. 5, W1 denotes an average value of widths measured at three opening portions in a direction parallel to a flow direction (MD) using a caliper, and W2 denotes an average value of widths measured at three opening portions in a direction (TD) perpendicular to the flow direction (MD) using a caliper. An average value of W1 and W2 is obtained as the width W of the opening portion. In Fig. 5, a case where the opening portion has a rectangular shape is described. In a case of the opening portion having a different shape, similarly, W1 may be determined for the longest width of the opening portion in the flow direction (MD), and W2 may be determined for the longest width in the direction (TD) perpendicular to the flow direction (MD).

(Thickness Tb of Bottom Portion Relative to Thickness Ta of Opening Portion)

Regarding the thickness Tb of the bottom portion relative to the thickness Ta of the opening portion, it is preferable that the opening end is thin and the bottom portion is thick, from the standpoint of achieving ease of storage in a package and filtration performance when used as a filter, for example. To give an example, a ratio (Tb/Ta) of the thickness Tb of the bottom portion to the thickness Ta of the opening portion may be 20 to 500 and preferably 30 to 400, for example.

(Ratio of Density $\rho b$ of Bottom Portion to Density $\rho a$ of Opening End)

Regarding the densities of the opening end and the bottom portion, for example, in a case where the fiber structure is formed by a melt-blowing method in which a molten polymer is extruded in a constant amount, the amount of the polymer extruded per area is considered to be approximately equal. Therefore, it is considered that the ratio of the density of the opening end to the density of the bottom portion is approximately equal to the ratio (Tb/Ta) of the thickness Tb of the bottom portion to the thickness Ta of the opening portion. Accordingly, in the case of the fiber structure formed by the melt-blowing method, or the like, a ratio ($\rho b/\rho a$) of a density $\rho b$ of the bottom portion to the density $\rho a$ of the opening end may be 20 to 500 and preferably 30 to 400, for example.

(Density $\rho b$ of Bottom Portion of Protrusion)

The density $\rho b$ of the bottom portion converted from the density of the density $\rho a$ of the opening end may be calculated by "density $\rho b$ of bottom portion = $\rho a \times$(Tb/Ta)", by using the fact that the ratio ($\rho b/\rho a$) of the density of the opening end to the density of the bottom portion is approximately equal to the ratio (Tb/Ta) of the thickness Tb of the bottom portion to the thickness Ta of the opening portion.

In this case, the density $\rho b$ of the bottom portion may be about 0.001 to 0.2 g/cm$^3$, preferably about 0.003 to 0.1 g/cm$^3$, and more preferably about 0.005 to 0.07 g/cm$^3$ (in particular, 0.01 to 0.05 g/cm$^3$), for example.

(Area of Opening Portion)

An area R of the opening portion can be set as appropriate in accordance with a purpose, and may be 200 mm$^2$ or larger, preferably 300 mm$^2$ or larger, and more preferably 400 mm$^2$ or larger, for example. An upper limit of the area R of the opening portion is not particularly limited, and may be 10000 mm$^2$, for example.

Here, the area R of the opening portion is an area of the top face of the fiber structure, and refers to a projected area of the top face when the fiber structure is imaged from above. In a case where the fiber structure has a plurality of protrusions, the area of the opening portion may be calculated as an average value of areas of three opening portions located at both ends and a center part on a line across the fiber structure. In a case where an opening area of the support can be easily found, the opening area of the support may be used as a representative value, for the sake of convenience.

The shape of the opening portion may be a polygonal shape (triangular shape, quadrangular shape, pentagonal shape, hexagonal shape, octagonal shape, etc.), a circular shape, an elliptic shape, an irregular shape, or the like. Of these, a quadrangular shape (e.g., a rectangular shape, a square shape, a rhombus shape, or another parallelogram) is preferable from the standpoint of facilitating the manufacturing. Regarding the shape of the opening portion, a corner or a straight portion of the polygonal shape may be rounded as long as the shape can be distinguished as a polygonal shape.

(Volume of Ideal Conic Solid)

The volume of the ideal conic solid C which can be calculated from the area R of the opening portion and the depth D of the hollow portion can be used as a criterion for evaluating the volume of the hollow portion. In this case, the volume A of the ideal conic solid C can be calculated by A = R$\times$D$\times$1/3.

The volume A of the ideal conic solid C can be selected from a wide range of 500 to 600000 mm$^3$, for example, and may be preferably 800 to 300000 mm$^3$ and more preferably 1000 to 100000 mm$^3$.

(Area of Ideal Conic Solid)

For use as a filter or the like, the area of the side wall or side walls of the ideal conic solid influences filtration efficiency, and therefore it is also possible to evaluate the fiber structure based on the area of the ideal conic solid C. In this case, the area B of the side wall of the ideal conic solid C can be calculated in accordance with the shape of the opening portion. For example, in a case where the height of the conic solid is the depth D and an opening portion of the conic solid has an n-sided polygonal shape or a circular shape, the area A of the side wall can be calculated using a development view of the conic solid developed with the n sides as bottom sides or a development view of the conic solid developed with an outer circumference of the circular shape as a bottom side. The side area based on a development view of the ideal conic solid as described above can be calculated as appropriate by a person skilled in the art.

When used as a filter, the area B of the side wall of the ideal conic solid C corresponds to a filtration area. When the filtration area is large, an area where dust can be captured is large, so that a pressure loss due to clogging with dust is reduced. Thus, the filter having a large filtration area can achieve both of high collection efficiency and a low pressure loss and can further achieve improvement in the filter life. Accordingly, it is preferable that the area B of the side wall of the ideal conic solid C is large. For such a reason, the area B of the side wall of the ideal conic solid C can be set as appropriate in accordance with a purpose, and may be 550 to 8000 mm$^2$, preferably 600 to 5000 mm$^2$, and more preferably 700 to 3000 mm$^2$, for example.

A ratio (B/R) of the area B of the side wall of the ideal conic solid to the area R of the opening portion corresponds to a filtration area per unit filter area. That is, if the filter area is fixed, a filter having a greater B/R can achieve both of high collection efficiency and a low pressure loss and can further achieve improvement in the filter life. Accordingly, B/R is preferably 1.1 or greater, more preferably 1.2 or greater, even more preferably 1.3 or greater, and particularly preferably 1.4 or greater. Meanwhile, an upper limit of B/R can be set as appropriate in accordance with a purpose, and may be preferably 6.0 or smaller from the standpoint of productivity.

(Basis Weight of Fiber Structure)

The basis weight of the fiber structure is not particularly limited. From the standpoint of weight reduction, a small basis weight is preferable, and the basis weight may be 5 to 200 g/m$^2$, preferably 10 to 150 g/m$^2$, and more preferably 15 to 80 g/m$^2$, for example.

The fiber structure may include a single protrusion or may include a plurality of protrusions. As long as the protrusion has a specific depth, the shape of the protrusion can be set as appropriate in accordance with the shape of the opening portion, and may be a bell shape, a columnar shape, a quadrangular prism shape, a quadrangular pyramid shape, an irregular shape, or the like, for example. The tip of the protrusion may preferably have a rounded shape. Here, the rounded shape need not be a perfect arc shape and may be a shape having slight irregularity as compared to an ideal arc shape. In a case where the fiber structure has a plurality of protrusions, the plurality of protrusions may have a combination of the above shapes, but it is preferable that the plurality of protrusions have substantially the same shape from the standpoint of productivity.

[Fibers of Fiber Structure]

The fiber structure may be formed by natural fibers (cellulose fibers such as cotton, kapok, or hemp, protein fibers such as wool or silk, etc.), semi-synthetic fibers (acetate fibers such as triacetate fibers, etc.), regenerated fibers (rayon, polynosic, cupra, Lyocell, etc.), synthetic fibers, or the like, for example. Among these fibers, one kind may be used alone or two or more kinds may be used in combination.

The synthetic fibers may be fibers that can be spun from a fiber-forming resin by a known technique. Examples of the fiber-forming resin include a polyolefin-based resin (poly($C_{2-4}$ olefin)-based resin such as polyethylene or polypropylene, etc.), a polyvinyl alcohol-based resin (ethylene-vinyl alcohol-based copolymer, etc.), a polyvinyl chloride-based resin (polyvinyl chloride, polyvinylidene chloride, etc.), a polyester-based resin (polyalkylene arylate-based resin such as polyethylene terephthalate, polytrimethylene terephthalate, polybutylene terephthalate, or polyethylene naphthalate, an aliphatic polyester-based resin such as polylactic acid, a wholly aromatic polyester-based resin such as liquid crystal polyester, etc.), a polyamide-based resin (aliphatic polyamide-based resin such as polyamide 6, polyamide 66, polyamide 11, polyamide 12, polyamide 610, or polyamide 612, a semi-aromatic polyamide-based resin, an aromatic polyamide-based resin such as polyphenylene isophthalamide, polyhexamethylene terephthalamide, or poly(p-phenylene terephthalamide), etc.), and a polyurethane-based resin (urethane-based polymer obtained through reaction between a polyisocyanate component and a polyol component such as polyether polyol or polyester polyol, etc.). Among these fiber-forming resins, one kind may be used alone or two or more kinds may be used in combination. Among these, a resin that allows fibers to be formed by melt blowing is preferable, and it is preferable to use a polyolefin-based resin, a polyester-based resin, a polyamide-based resin, a polyurethane-based resin, and in particular, a polypropylene-based resin.

The average fiber diameter can be set as appropriate in accordance with the size and the purpose of the fiber structure. For example, from the standpoint of filtration performance, the average fiber diameter may be 0.2 to 20 $\mu$m, preferably 0.5 to 15 $\mu$m, and more preferably 0.7 to 12 $\mu$m (in particular, 1 to 10 $\mu$m). The average fiber diameter is a value measured by a method described in Examples later.

The average fiber length can be selected in accordance with a manufacturing method therefor, and may be 10 mm or greater and preferably 20 mm or greater. In a case of a melt-blown non-woven fabric, the fibers are, normally, continuous fibers.

In accordance with a purpose, the fiber structure may contain a general-purpose additive, e.g., a stabilizer (a thermal stabilizer such as a copper compound, an ultraviolet absorber, a light stabilizer, an antioxidant, etc.), an antimicrobial agent, a deodorant, a fragrance, a colorant (dye or pigment, etc.), a filler, a flame retardant, an electrification improver (hindered amine, etc.), an antistatic agent, a conductive agent, a plasticizer, a lubricant, a crystallization rate retardant, or the like. Among these additives, one kind may be used alone or two or more kinds may be used in combination.

Regarding these additives, although selectable in accordance with the type, the amount of the additives per 100 parts by mass of a resin component may be 0.01 to 30 parts by mass, preferably 0.1 to 20 parts by mass, and more preferably 0.3 to 10 parts by mass (in particular, 0.5 to 5 parts by mass), for example. These additives may be contained in the fibers, or may be adhered (carried) on the fiber surface. The fiber structure may be made into an electret, as necessary.

The fiber structure may further include a support formed by a filamentary body, and the opening portion may be supported by the support. The filamentary body may be formed in accordance with the shape of the opening portion, and may be formed on the protrusion side, at the opening end. The average diameter of the filamentary body can be set as appropriate in accordance with the shape or the purpose of the fiber structure, and can be selected from a range of about 0.01 to 10 mm. From the standpoint of weight reduction, the average diameter of the filamentary body may be about 0.01 to 3 mm, preferably about 0.05 to 2 mm, and more preferably about 0.1 to 1 mm (in particular, 0.15 to 0.5 mm), for example.

The filamentary body may be inorganic fibers or organic fibers. Examples of the inorganic fibers include glass fibers, carbon fibers, activated carbon fibers, alumina fibers, silicon carbide fibers, boron fibers, Tyranno fibers, and metal fibers (gold fibers, silver fibers, copper fibers, steel fibers, aluminum fibers, stainless steel fibers, etc.). Examples of the organic fibers include natural fibers, synthetic fibers, semi-synthetic fibers, and regenerated fibers, and include fibers exemplified as the fibers to form the fiber structure. Among these, organic fibers formed of a thermoplastic resin of the same type as the thermoplastic resin forming the fibers of the fiber structure is preferable from the standpoint of integration with the fibers of the fiber structure.

Among these fibers, one kind may be used alone or two or more kinds may be used in combination. The fibers forming the filamentary body is not limited to a monofilament, and may be a spun yarn or a multifilament yarn. In particular, a combination of two or more kinds of fibers may be a blended yarn or a multifilament yarn of different kinds of fibers, or may be a monofilament yarn in which a synthetic resin as a raw material forms an alloy or a composite structure. From the standpoint of simplicity, a monofilament yarn formed of a single thermoplastic resin is generally used. The transverse sectional shape (the shape of a cross section along a direction perpendicular to the length direction of the fiber) of the monofilament yarn is not limited to a round sectional shape or a modified sectional shape (a flattened shape, an elliptic shape, a polygonal shape, a 3-lobed to 14-lobed shape, a T shape, an H shape, a V shape, a dog-bone (I shape), etc.), which is a general solid sectional shape, and may be a hollow sectional shape or the like. Normally, the monofilament yarn has a round sectional shape.

[Physical Property of Fiber Structure]

(Air Permeability of Fiber Structure)

For example, as an air permeability based on a Frazier method, the fiber structure may have an air permeability of 1 cm$^3$/(cm$^2$·s) or more. The air permeability may be preferably 10 to 1000 cm$^3$/(cm$^2$·s), more preferably 50 to 800 cm$^3$/(cm$^2$·s), and even more preferably 100 to 700 cm$^3$/(cm$^2$·s). Here, the air permeability is a value measured by a method described in Examples later.

(Collection Efficiency)

The fiber structure may be used for capturing, for example, a fine particle (e.g., a fine particle having a number average particle size in a range of 0.01 to 2 $\mu$m, preferably 0.05 to 1 $\mu$m, and particularly 0.1 to 0.5 $\mu$m). For example, collection efficiency for dust under a dry condition may be 30% or more, preferably 40% or more, and more preferably 50% or more, for example. Here, the collection efficiency is a value measured by a method described in Examples later.

(Pressure Loss and QF Value)

A pressure loss of the fiber structure in capturing dust may be 5 Pa or less, preferably 4 Pa or less, and more preferably 3 Pa or less, for example. A lower limit of the pressure loss is not particularly limited, and may be 0.01 Pa. A QF value calculated by the following formula from the collection efficiency and the pressure loss may be 0.2 or greater, preferably 0.4 or greater, and more preferably 0.8 or greater. An upper limit of the QF value is not particularly limited, and may be about 4, for example. Here, the pressure loss and the QF value are values measured by methods described in Examples later.

$$QF(1/Pa) = -\ln(100 - \Delta E)/\Delta P$$

[In the above formula, $\Delta E$ is collection efficiency (%), and $\Delta P$ is a pressure loss (Pa).]

(Pressure Loss Upon NaCl Deposition)

The fiber structure can perform capturing using the hollow portion, and can still perform favorable capturing even in a state of already holding a certain amount of dust. As an index of this, for example, a pressure loss measured after 30 mg of NaCl is deposited in advance may be 6 Pa or less, preferably 5 Pa or less, and more preferably 4.2 Pa or less, for example. A lower limit of the pressure loss is not particularly limited, and may be 0.1 Pa. Here, the pressure loss after NaCl deposition is a value measured by a method described in Examples later.

(Increase in Pressure Loss)

The fiber structure can perform capturing using the hollow portion, and can still perform favorable capturing even in a state of already holding a certain amount of dust. As an index of this, for example, an increase in pressure loss may be 5 Pa or less, preferably 4 Pa or less, and more preferably 3 Pa or less, for example. It is most preferable that pressure loss does not increase, and in this case, the increase amount is 0 Pa. Here, the increase in pressure loss is a value measured by a method described in Examples later.

[Manufacturing Method for Fiber Structure]

A manufacturing method for the fiber structure is not particularly limited as long as the fibers can be formed into a shape having a specific depth, and a dry method (carding method or airlay method) or a wet method using staple fiber, or spunbonding may be used, for example. A preferable manufacturing method is a manufacturing method using melt-blowing formation, and hereinafter, the method using melt-blowing formation will be described.

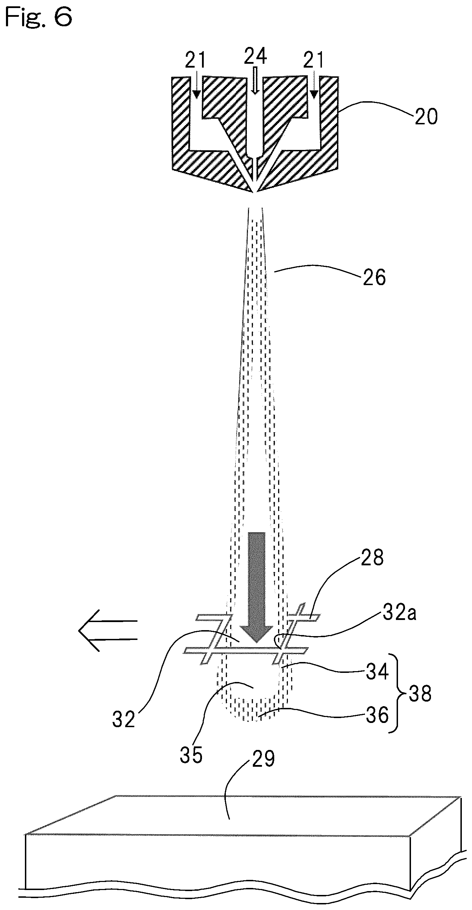

Fig. 6 shows an example of melt-blowing formation. Fig. 6 is a schematic enlarged perspective view for illustrating a melt-blowing formation method for a fiber structure according to one aspect of the present invention. In Fig. 6, the cross section of a nozzle 20 is shown so as to show the inside of the nozzle.

In normal melt-blowing formation, a collection net is not present, and ultrafine fibers having fusion property are collected in a folded state on a suction collector, and the collected fibers are fused and integrated with each other to form a sheet.

On the other hand, in melt-blowing formation of the fiber structure, openings of a collection net allow ultrafine fibers to pass through the collection net while being extended without being folded. Thus, the ultrafine fibers having passed through the openings are extended without being folded, and with the fiber shapes kept, the ultrafine fibers are fused at mutual contact parts while decelerating. Finally, the fibers are collected at a part corresponding to the bottom portion, whereby the bottom portion can be formed. In this case, the fiber aggregate can be formed into a sheet while increasing the surface area of the non-woven fabric, and the protrusion having the side wall portion and the bottom portion can be formed. At this time, unfused fibers of the fibers having passed through the collection net and extended are present as a thick part of the bottom portion.

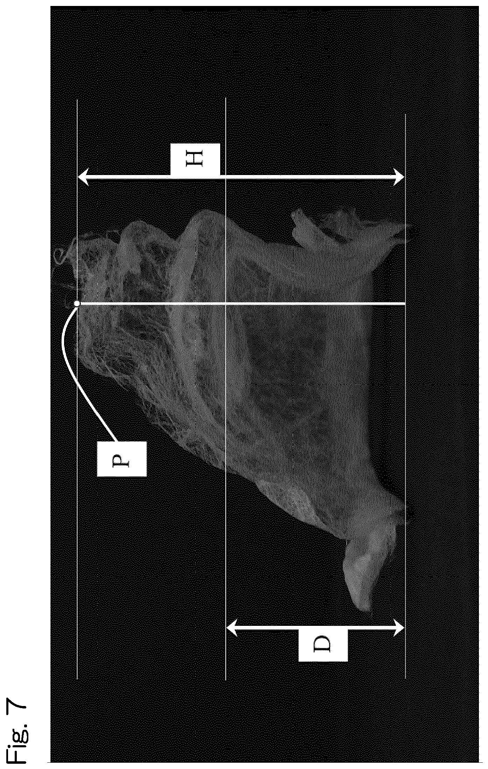

For example, as shown in a photograph (Fig. 7) of a fiber structure obtained in Example 1, extended fibers may form a plurality of layers at the bottom portion. In this case, the individual layers are present separately from each other and are formed as independent layers. Therefore, the shapes of the layers are often different from each other. To count the number of the layers, a fiber group having passed through an opening while being extended to form side wall parts, the side wall parts merging together from the lateral side toward the bottom center to form the bottom portion in the melt-blowing process, is counted as one layer. In Fig. 7, the number of layers of the bottom portion is counted as three. In Fig. 7, an intermediate layer is formed between an innermost layer on the opening side and an outermost layer. For example, in a case of using the fiber structure as a filter, even if there are particles leaking out through a side surface of the innermost layer, the leaking particles can still be captured by the intermediate layer and the outermost layer. Further, in a case where the bottom portion has a plurality of layers, there may be larger gaps between the fibers of the outermost layer in the bottom portion which contacts the apex X of the protrusion, than gaps between the fibers of the innermost layer in the bottom portion which is located on the side opposite to the apex X of the protrusion. The difference between the gaps between fibers can be visually observed in a photograph of a sectional view.

From the nozzle 20, a molten polymer 24 is ejected together with a jet flow of high-temperature gas 21 indicated by a downward arrow, and the ejected polymer is blown by the jet flow so as to form a fiber flow 26 of a plurality of thinned fibers. Then, the fiber flow 26 collides with a collection net 28 located on the downstream side of the jet flow. The fiber flow 26 colliding with the collection net 28 passes through an opening of the collection net 28 as a swelling port 32, and then the fiber flow 26 moves downstream from the collection net 28, so as to finally form a swelling portion 38 which is a protrusion formed by fibers. Further, a suction collector 29 is provided downstream of the collection net 28.

In the swelling portion 38 as described above, a side wall 34 of the swelling portion 38 is formed by the fiber flow 26 from the swelling port 32 as an upper end, and a bottom portion 36 is formed. The side wall 34 and the bottom portion 36 may be each formed by fibers of small fineness by a melt-blowing method. Inside the swelling portion 38, a hollow portion 35 is formed by an air flow flowing from the center of an opening 28a. In Fig. 5, for the purpose of simplification, fibers that form the opening portion are not shown, but the opening portion is formed by the fibers deposited on the collection net 28 and the fiber structure is formed by the opening portion and the swelling portion 38. Normally, by a conveyor or the like, the collection net 28 moves in a conveyor advancing direction indicated by an arrow.

It suffices that the fiber structure includes at least the opening portion and the protrusion (swelling portion) protruding from the opening portion. After the swelling portion is formed by a melt-blowing method, the collection net may be removed, or the collection net may be included in the fiber structure, as a support (filamentary body) for reinforcing the opening portion of the fiber. In a case where the fiber structure is removed from the collection net, for example, a separation roll (not shown) may be provided on the downstream side of the place where the fiber structure is formed, in the conveyor advancing direction, to separate the fiber structure from the collection net.

A thermoplastic resin (as necessary, including other additives) is melt-kneaded using a general mixer (e.g., a melting-kneading extruder). The melting temperature is not particularly limited as long as the thermoplastic resin can be melted, and can be selected in accordance with the kind of the thermoplastic resin. In a case of a polypropylene-based resin, the melting temperature may be about 150 to 280°C, preferably about 160 to 250°C, and more preferably about 180 to 240°C, for example.

The melt-kneaded thermoplastic resin is fed to a spinneret. Normally, spinning holes are formed in a row in the spinneret. The interval between the spinning holes may be about 100 to 4000 holes/m, preferably about 500 to 3000 holes/m, and more preferably about 1000 to 2500 holes/m, for example. A single-hole ejection amount (X) may be about 0.01 to 1 g/hole·min, preferably about 0.03 to 0.5 g/hole·min, and more preferably about 0.05 to 0.3 g/hole·min, for example. In a case of a polypropylene-based resin, the spinning temperature may be about 150 to 300°C, preferably about 200 to 280°C, and more preferably about 220 to 270°C, for example. The ejection amount of the molten resin from the spinneret may be about 10 to 2000 g/(m·min), preferably about 50 to 1000 g/(m·min), and more preferably about 100 to 500 g/(m·min).

From a slit provided near the spinneret, the molten resin is ejected together with high-temperature air (normally having the same temperature as the spinning temperature) while being formed into an ultrafine fiber shape, toward the net member or the support having a predetermined opening area. The opening area (Rn) can be selected from 200 to 10000 mm$^2$, for example, and may be preferably 300 to 5000 mm$^2$ and more preferably 400 to 2000 mm$^2$, for example. In a case where the support having a similar opening area is used as the net member, the basis weight of the support can be selected from 5 to 200 g/m$^2$, for example, and may be preferably 10 to 100 g/m$^2$ or 15 to 55 g/m$^2$.

An air pressure (Y) can be selected from a range of about 0.001 to 0.06 MPa, in accordance with the opening area, a distance to the collection net, and a desired size of the protrusion, and may be selected from a range of about 0.002 to 0.05 MPa, preferably about 0.003 to 0.030 MPa, more preferably about 0.005 to 0.020 MPa, even more preferably about 0.005 to 0.013 MPa, for example.

The air temperature may be, for example, a temperature close to the spinning temperature, such as a temperature higher than the spinning temperature by 0 to 50°C, preferably a temperature higher than the spinning temperature by 3 to 30°C, and more preferably a temperature higher than the spinning temperature by 5 to 20°C.

Further, a distance (collection distance: Z) between a nozzle port and the collection net may preferably be adjusted in order to adjust the height or the shape of the protrusion. The collection distance can also be selected as appropriate in accordance with a suction force of the suction collector. The collection distance can be selected from a range of about 1 to 100 cm, and may be about 2 to 50 cm, preferably about 3 to 30 cm, and more preferably about 5 to 20 cm (in particular, 7 to 15 cm), for example.

In the present invention, in order that the fiber structure blown by the air pressure can form the protrusion as described above, a gap formed between the collection net and the suction collector (belt conveyor) may have any distance that allows the protrusion to be formed at a desired height through suction. The gap may be 10 mm or larger, preferably about 20 to 300 mm, and more preferably about 30 to 200 mm, for example.

The manufacturing condition can be changed as appropriate in accordance with the opening area and a desired protrusion size, for example. As an example of the manufacturing condition for manufacturing the fiber structure, a smaller collection distance is more preferable and a lower air pressure is more preferable, if the opening area is approximately the same.

For example, in a case of using the single-hole ejection amount (X: g/hole·min), the air pressure (Y: MPa), the collection distance (Z: cm), and the opening area (Rn: mm$^2$) described above, these values may be adjusted so that $(Y \times Z)/(X \times Rn) \times 10000$ is 28 or smaller.

With the opening area, the single-hole ejection amount, and the collection distance being approximately the same, lowering the air pressure is likely to allow the hollow portion to be deep.

With the opening area, the single-hole ejection amount, and the air pressure being approximately the same, reducing the collection distance is likely to allow the hollow portion to be deep.

With the opening area, the collection distance, and the air pressure being approximately the same, increasing the single-hole ejection amount is likely to allow the hollow portion to be deep.

The basis weight of the fiber structure can be adjusted through control of the feeding speed (conveyor speed) of the flat-plate net member. The conveyor speed may be about 1 to 200 m/min, preferably about 2 to 100 m/min, and more preferably about 3 to 50 m/min (in particular, 5 to 30 m/min), for example. In the present invention, it is possible to obtain the fiber structure having a desired protrusion shape by adjusting the conveyor speed, the collection distance, and the air pressure as appropriate.

The fiber structure obtained as described above may be imparted with an electric charge through a general electret process. Examples of such a general method include: a method of imparting an electric charge by friction or contact, a method of applying active energy rays (e.g., electron beams, ultraviolet rays, or X-rays), a method of using electric discharge in gases such as corona discharge or plasma, a method of applying a high electric field, and a hydrocharging method of applying ultrasonic vibration via a polar liquid such as water.

In the hydrocharging method, for example, a polar solvent such as water or an organic solvent (water is preferable in terms of productivity, considering disposal of waste water treatment or the like) is sprayed to the fiber structure, or the fiber structure is vibrated while being sprayed with the polar solvent, or suction is performed from one side of the fiber structure after or while the polar solvent is applied, whereby the polar solvent permeates into the fiber structure so as to charge the fiber structure. The pressure of the polar solvent to collide with the fiber structure may be preferably 0.1 to 5 MPa. The suction pressure from the lower side may be preferably 500 to 5000 mmH$_2$O. A hydrocharging processing time may be preferably 0.001 to 5 seconds.

(Applications of Fiber Structure)

The fiber structure can be used for applications in various fields such as industry, agriculture, and life materials, e.g., a filter, a wiper, a separator, a capacitor, a capacitor microphone, an ultrasonic diagnosis transducer, and a cushion material.

In particular, the fiber structure is useful for various filters as follows: liquid filters in a pharmaceutical industry field, an electronics industry field, a food industry field, or an automobile industry field, filters in a home-appliance field (e.g., an air cleaner and an air conditioner), filters in an industry field (e.g., a bag filter, a prefilter, and a medium performance filter), and filters in an automobile industry field (e.g., such as a cabin filter).

(Three-dimensional Filter)

To make good use of a three-dimensional structure of the fiber structure, the fiber structure may be used as a three-dimensional filter by being stored in a casing having a predetermined shape. The three-dimensional filter can be used as a filter having a filtration function for a fluid such as gas or liquid, and preferably gas. When used as a filtration filter, the three-dimensional filter can be used with the opening of the fiber structure directed to the upstream side and the protrusion directed to the downstream side when a fluid is filtered.

In the fiber structure including a plurality of protrusions, the plurality of protrusions protrude from one face and a plurality of consecutive hollow portions are arranged independently of each other. Therefore, each hollow portion can exhibit collection performance independently like a bug catching net. In this fiber structure, the thickness of the filter can be reduced to a small thickness based on the height of the protrusion, and in addition, as compared to a pleated filter having approximately the same thickness, the fiber structure can have a larger surface area owing to the plurality of protrusions than that of the linear pleats, and this can contribute to not only collection efficiency of the filter but also prolonging of the life of the filter.

By filling the hollow portion of the three-dimensional filter with a granular material such as activated carbon, it is possible to achieve high filtration performance while imparting a function based on the filling material. Here, "filling" means that the granular material is placed in at least a part of the hollow portion, and the hollow portion need not be entirely filled up.

The fiber structure may be used as a modular three-dimensional filter in which an end of the fiber structure is fixed to a casing. The modular three-dimensional filter can improve ease of handling with a filtration device and can be used as a replacement filter.

In a case where the fiber structure is stored in a casing, the fiber structure need not be subjected to pleating, which is typically performed for enlarging the surface area of a filter material, that is, the fiber structure can be used without pleats.

EXAMPLE

Hereinafter, the present invention will be described in more detail, using Examples. However, the present invention is not limited to Examples at all. In the following Examples and Comparative examples, various physical properties were measured by methods described below.

[Depth D of Hollow Portion]

A depth D of the hollow portion of the fiber structure was measured by inserting a depth bar of a caliper (CD-20C, manufactured by Mitutoyo Corporation) into the hollow portion of the fiber structure. Specifically, the caliper was inserted from the opening side, and the depth was measured when the caliper contacts with the fiber forming the bottom portion. Measurement was performed once per one protrusion, and in a case where the fiber structure had a plurality of protrusions, the depth of the hollow portion was calculated as an average value of depths of three protrusions at both ends and a center part on a line across the fiber structure.

In measurement, air may be blown from the opening side or sucked from the protrusion, or both of such operations may be performed in order to adjust the shape of the protrusion, within such a range that joining between the fibers does not change, and then the depth may be measured after the shape of the protrusion is adjusted. Specifically, air is blown for one minute at an air pressure of 0.5 MPa from a location 10 cm away from the opening of the protrusion to swell the protrusion. Then, blowing of air is stopped, and when the shape of the protrusion stops changing, it is determined that "the structure of the protrusion is stabilized", and the depth can be measured.

[Thickness Ta of Opening Portion]

The fiber structure was cut along a cross section passing through the center of the protrusion, and the cross section was photographed using a scanning electron microscope (SEM) (magnification: 35 to 200, arbitrarily set so as to cover the protrusion height), and the thickness Ta of the opening portion and the thickness Tb of the bottom portion were determined from the photograph. As the thickness of the protrusion, the greatest thickness was measured. A scale was calculated using a scale bar in the photograph at an arbitrary magnification. The thicknesses were measured at five points randomly selected from the photograph, and the average value thereof was employed.

[Thickness Tb of Bottom Portion]

Regarding the thickness Tb of the bottom portion of the fiber structure, the protrusion was cut in half with respect to the MD direction. Then, the thickness was measured using a caliper (CD-20C, manufactured by Mitutoyo Corporation). Measurement was performed once per one protrusion, and in a case where the fiber structure had a plurality of protrusions, the depth of the hollow portion was calculated as an average value of depths of three protrusions at both ends and a center part on a line across the fiber structure.

[Width of Opening Portion]

A width W of the opening portion of the fiber structure was measured by measuring each side of the opening portion using a caliper. Measurement was performed two times in total in the MD direction (W1) and the CD direction (W2), per one opening portion. In a case where the fiber structure had a plurality of opening portions, the width of the opening portion was calculated as an average value of widths of three opening portions located at both ends and a center part on a line across the fiber structure.

[Area R of Opening Portion]

The area of the opening portion was calculated as a product of the widths W1 and W2 of the opening portion. The area of the opening portion may be measured from a photograph of the opening portion. In this case, if the fiber structure had a plurality of opening portions, the area of the opening portion was calculated as an average value of areas of three opening portions located at both ends and a center part on a line across the fiber structure.

[Average Fiber Diameter]

The fiber structure was photographed using a scanning electron microscope (SEM) (magnification: 1000x). Diameters of any fifty fibers in the photograph were measured, and the average value thereof was calculated.

[Air Permeability]

The air permeability was measured by a Frazier method in accordance with JIS L 1913 (2010).

[Collection Efficiency, Pressure Loss, and QF Value]

Using a filter evaluation device (8130A, manufactured by TSI), a filter characteristic of the fiber structure was evaluated. First, a test sample was mounted to a measurement cell such that the filtration face had a diameter of 110 mm. An NaCl aqueous solution prepared at a concentration of 2.0 wt% was put into the filter evaluation device, and NaCl particles having a number average diameter of 0.26 $\mu$m were produced as test dust. Air containing the produced NaCl dust (dust concentration D1: 200 mg/m$^3$) was caused to flow into the measurement cell in which the filter was set, for 10 seconds at a flow rate of 32 L/min, a dust concentration D1 on the upstream side and a dust concentration D2 on the downstream side (after filtration) were measured using a light scattering mass concentration meter, and the collection efficiency was calculated using the following Formula.

$$\text{Collection efficiency (\%)} = \{(D1\text{-}D2)/D1\} \times 100$$

In addition, a fine differential pressure gauge was placed between the upstream side and the downstream side of the measurement cell of the filter evaluation device, and a differential pressure (pressure loss) was measured at a flow rate of 32 L/min. Further, the QF value was calculated using the following Formula, on the basis of a pressure loss and a natural logarithm of the filter pass rate calculated from the collection efficiency.

$$\text{QF}(1/\text{Pa}) = -\ln(100 - \Delta E)/\Delta P$$

[In the above formula, $\Delta E$ is collection efficiency (%), and $\Delta P$ is a pressure loss (Pa).]

[Pressure Loss Upon NaCl Deposition]

Using a filter evaluation device (8130A, manufactured by TSI), a filter characteristic of the fiber structure was evaluated. First, a test sample was mounted to a measurement cell such that the filtration face had a diameter of 110 mm. An NaCl aqueous solution prepared at a concentration of 2.0 wt% was put into the filter evaluation device, and NaCl particles having a number average particle size of 0.26 $\mu$m were produced as test dust. Air containing the produced NaCl dust (dust concentration D1: 200 mg/m$^3$) was caused to flow into the measurement cell in which the filter was set, for 60 minutes at a flow rate of 32 L/min, and a dust concentration D1 on the upstream side and a dust concentration D2 on the downstream side (after filtration) were measured using a light scattering mass concentration meter.

In a case where the measurement could continue up to and after deposition of 30 mg of dust, a differential pressure (pressure loss) at a flow rate of 32 L/min was measured at the time when 30 mg of dust was deposited, using the fine differential pressure gauge between the upstream side and the downstream side of the measurement cell of the filter evaluation device.

In a case where the measurement could not continue up to deposition of 30 mg of dust, an approximation line for pressure losses was drawn, and a pressure loss at the time when 30 mg of dust was deposited was calculated through extrapolation and was employed.

In a case where the pressure loss could not be calculated by the above two methods, the greatest pressure loss in a measurement period was employed.

[Increase in Pressure Loss]

The increase in pressure loss was calculated as a difference between the initial pressure loss and the above pressure loss when deposition reached 30 mg (or corresponding value), which was employed in measurement of the pressure loss after NaCl deposition.

(Example 1)

Manufacturing was performed as follows, using a general melt-blown non-woven fabric manufacturing device. That is, polypropylene (melt flow rate: 600 g/10 minutes) was melted at 200°C by an extruder, and then was ejected onto a flat-plate net (manufactured by Conwed; product name "R02659"; a polypropylene net having orthogonal warps and wefts and heat-fused intersections; mesh size: 18×28 mm; basis weight: 49 g/m$^2$; average fineness: 300 $\mu$m) used as a collection net, at a spinning temperature of 250°C and a single-hole ejection amount of 0.1 g/hole·min, from a spinning nozzle (spinneret) having the number of spinning holes of 1300 holes/m (arranged in one row) in the spinneret. Further, at the same time as polypropylene was ejected, hot air with an air temperature of 260°C and an air pressure of 0.01 MPa was blown from a slit provided near the spinning holes to make the ejected fibers fine, and then the fibers were collected on a net conveyor located 10 cm below the nozzle (spinneret), thus manufacturing a fiber structure having a three-dimensional shape. The average fiber diameter of the non-woven fabric was 3.1 $\mu$m. The distance between the collection net and the suction collector was 10 cm.

Subsequently, charging processing was performed on the obtained fiber structure by a hydrocharging method. Specifically, under the following condition, water was sprayed to the fiber structure, and then a slit-shaped suction nozzle was brought into contact with a surface of the fiber structure and sucked water, thereby causing water to permeate into the fiber structure. Then, the fiber structure was drained and thereafter was naturally dried.

Water pressure: 0.2 MPa, suction pressure: 2000 mmH$_2$O, processing time: 0.0084 seconds (speed 10 m/min)

Fig. 7 shows a photograph of a cross section of one protrusion of the fiber structure along the thickness direction, which was taken by a camera. It should be understood that the photograph shows the shape as it was, which had been slightly distorted at the time of cutting the fiber structure to expose the cross section, and therefore, the actual depth D and the actual height H are different from values measured from the photograph.

Further, Table 1 shows the results of measurement of the air permeability, the collection efficiency, the pressure loss, and the QF value of the obtained electret body.

(Example 2)

A fiber structure was manufactured in the same manner as in Example 1 except that the air pressure was set to 0.007 MPa and the distance between the nozzle (spinneret) and the collection net was set to 15 cm. Characteristics of the obtained fiber structure and electret body are shown in Table 1.

(Example 3)

A fiber structure was manufactured in the same manner as in Example 1 except that the air pressure was set to 0.007 MPa and the distance between the nozzle (spinneret) and the collection net was set to 10 cm. Characteristics of the obtained fiber structure and electret body are shown in Table 1.

(Example 4)

A fiber structure was manufactured in the same manner as in Example 1 except that the air pressure was set to 0.005 MPa and the distance between the nozzle (spinneret) and the collection net was set to 15 cm. Characteristics of the obtained fiber structure and electret body are shown in Table 1.

(Example 5)

A fiber structure was manufactured in the same manner as in Example 1 except that the air pressure was set to 0.007 MPa and the distance between the nozzle (spinneret) and the collection net was set to 20 cm. Characteristics of the obtained fiber structure and electret body are shown in Table 1.

(Example 6)

A fiber structure was manufactured in the same manner as in Example 1 except that the air pressure was set to 0.006 MPa and the distance between the nozzle (spinneret) and the collection net was set to 20 cm. Characteristics of the obtained fiber structure and electret body are shown in Table 1.

(Example 7)

A fiber structure was manufactured in the same manner as in Example 1 except that the single-hole ejection amount was set to 0.2 g/hole·min, the air pressure was set to 0.012 MPa, and the distance between the nozzle (spinneret) and the collection net was set to 15 cm. Characteristics of the obtained fiber structure and electret body are shown in Table 1.

(Example 8)

A fiber structure was manufactured in the same manner as in Example 1 except that the single-hole ejection amount was set to 0.2 g/hole·min, the air pressure was set to 0.014 MPa, and the distance between the nozzle (spinneret) and the collection net was set to 15 cm. Characteristics of the obtained fiber structure and electret body are shown in Table 1.

(Example 9)

A fiber structure was manufactured in the same manner as in Example 1 except that the single-hole ejection amount was set to 0.2 g/hole·min, the air pressure was set to 0.014 MPa, and the distance between the nozzle (spinneret) and the collection net was set to 10 cm. Characteristics of the obtained fiber structure and electret body are shown in Table 1.

(Example 10)

A fiber structure was manufactured in the same manner as in Example 1 except that the flat-plate net used as a collection net was changed to a polypropylene net having orthogonal warps and wefts and heat-fused intersections (mesh size: 36×28 mm, average fineness: 300 μm). Characteristics of the obtained fiber structure and electret body are shown in Table 1.

(Example 11)

A fiber structure was manufactured in the same manner as in Example 1 except that the flat-plate net used as a collection net was changed to a polypropylene net having orthogonal warps and wefts and heat-fused intersections (mesh size: 36×20 mm, basis weight: 7 g/m², average fineness: 100 μm). Characteristics of the obtained fiber structure and electret body are shown in Table 1.

(Comparative Example 1)

Fibers were directly collected on the suction collector without using a flat-plate net. The distance between the nozzle and the collector was 20 cm. Except for these, a fiber structure was manufactured in the same manner as in Example 1. Characteristics of the obtained fiber structure and electret body are shown in Table 1.

(Comparative Example 2)

A fiber structure was manufactured in the same manner as in Example 1 except that the air pressure was set to 0.012 MPa and the distance between the nozzle (spinneret) and the collection net was set to 15 cm. Characteristics of the obtained fiber structure and electret body are shown in Table 1.

(Comparative Example 3)

Using a flat-plate net (manufactured by Conwed; product name "R5340"; a polypropylene net having orthogonal warps and wefts and heat-fused intersections; mesh size: 6×6 mm; basis weight: 19 g/m²; average fineness: μm), a fiber structure was manufactured in the same manner as in Example 1 except that the air pressure was set to 0.007 MPa and the distance between the nozzle (spinneret) and the collection net was set to 10 cm. Characteristics of the obtained fiber structure and electret body are shown in Table 1.

[Table 1-1]

| | Hollow Depth (D) mm | Protrusion Thickness Tb mm | Opening portion MD-direction Width W1 mm | Opening portion CD-direction Width W2 mm | Opening portion Average Width W mm | Opening portion Area (R) mm² | Opening portion Thickness Ta mm | Tb/Ta Thickness Ratio | Tb/D Ratio |
|---|---|---|---|---|---|---|---|---|---|
| Example 1 | 12.3 | 17.5 | 18 | 28 | 23 | 504 | 0.062 | 280.7 | 1.4 |
| Example 2 | 12.4 | 13.2 | 18 | 28 | 23 | 504 | 0.062 | 211.9 | 1.1 |
| Example 3 | 40.4 | 1.5 | 18 | 28 | 23 | 504 | 0.070 | 21.1 | 0.0 |
| Example 4 | 24.3 | 6.6 | 18 | 28 | 23 | 504 | 0.049 | 134.2 | 0.3 |
| Example 5 | 11.7 | 8.3 | 18 | 28 | 23 | 504 | 0.052 | 159.9 | 0.7 |
| Example 6 | 26.1 | 2.6 | 18 | 28 | 23 | 504 | 0.056 | 46.0 | 0.1 |
| Example 7 | 31.2 | 2.4 | 18 | 28 | 23 | 504 | 0.045 | 53.7 | 0.1 |

**EP 4 624 647 A1**

(continued)

| | Hollow Depth (D) mm | Protrusion Thickness Tb mm | Opening portion MD-direction Width W1 mm | Opening portion CD-direction Width W2 mm | Opening portion Average Width W mm | Opening portion Area (R) mm² | Opening portion Thickness Ta mm | Tb/Ta Thickness Ratio | Tb/D Ratio |
|---|---|---|---|---|---|---|---|---|---|
| Example 8 | 9.1 | 8.7 | 18 | 28 | 23 | 504 | 0.053 | 165.5 | 1.0 |
| Example 9 | 24.7 | 10.4 | 18 | 28 | 23 | 504 | 0.053 | 196.3 | 0.4 |
| Example 10 | 34.1 | 3.2 | 36.0 | 28.0 | 32 | 1008 | 0.054 | 59.3 | 0.1 |
| Example 11 | 25.5 | 10.9 | 36.0 | 20.0 | 28 | 720 | 0.067 | 162.7 | 0.4 |
| Comparative example 1 | - | - | - | - | - | - | - | - | - |
| Comparative example 2 | 2.5 | 9.8 | 18 | 28 | 23 | 504 | 0.084 | 116.0 | 3.9 |
| Comparative example 3 | 1.0 | 2.3 | 6 | 6 | 6 | 36 | 0.061 | 38.1 | 2.3 |

[Table 1-2]

| | Bottom Portion Density ρb g/cm³ | Ideal Conic Solid Volume Equivalent mm³ | Ideal Conic Solid Area Equivalent (B) mm² | B/R | Average Fiber Diameter μm | Mesh Size g/m² |
|---|---|---|---|---|---|---|
| Example 1 | 0.002 | 2058 | 760 | 1.51 | 3.1 | 40.3 |
| Example 2 | 0.003 | 2076 | 764 | 1.52 | 4.1 | 38.9 |
| Example 3 | 0.027 | 6792 | 1930 | 3.83 | 4.1 | 39.9 |
| Example 4 | 0.006 | 4074 | 1228 | 2.44 | 4.0 | 37.4 |
| Example 5 | 0.005 | 1962 | 741 | 1.47 | 4.5 | 38.1 |
| Example 6 | 0.015 | 4390 | 1308 | 2.59 | 6.5 | 39.4 |
| Example 7 | 0.016 | 5242 | 1525 | 3.03 | 5.8 | 38.6 |
| Example 8 | 0.004 | 1533 | 660 | 1.31 | 3.4 | 37.6 |
| Example 9 | 0.004 | 4146 | 1246 | 2.47 | 3.4 | 40.1 |
| Example 10 | 0.012 | 11458 | 2407 | 2.39 | 0.0 | 37.6 |
| Example 11 | 0.005 | 6120 | 1610 | 2.24 | 0.0 | 50.2 |
| Comparative example 1 | - | - | - | - | 3.1 | 40.6 |
| Comparative example 2 | 0.004 | 422 | 518 | 1.03 | 3.1 | 38.9 |
| Comparative example 3 | 0.017 | 12 | 38 | 1.06 | 4.1 | 39.3 |

[Table 1-3]

| | Air Permeability cc | Collection Efficiency % | Pressure Loss Pa | QF Pa⁻¹ | Pressure Loss Upon 30 mg of NaCl Deposition Pa | Pressure Loss Increase ΔP Pa |
|---|---|---|---|---|---|---|
| Example 1 | 149 | 92.61 | 2.7 | 0.96 | 4.1 | 1.4 |
| Example 2 | 550 | 88.46 | 1.0 | 2.16 | 1.4 | 0.4 |

**17**

(continued)

| | Air Permeability cc | Collection Efficiency % | Pressure Loss Pa | QF Pa$^{-1}$ | Pressure Loss Upon 30 mg of NaCl Deposition Pa | Pressure Loss Increase $\Delta$P Pa |
|---|---|---|---|---|---|---|
| Example 3 | 263 | 70.07 | 0.7 | 1.72 | 0.7 | 0.0 |
| Example 4 | 524 | 82.31 | 1.0 | 1.73 | 3.4 | 2.4 |
| Example 5 | 528 | 87.10 | 1.0 | 2.05 | 2.3 | 1.3 |
| Example 6 | 582 | 58.89 | 1.0 | 0.89 | 2.4 | 1.4 |
| Example 7 | 455 | 63.99 | 1.0 | 1.02 | 1.5 | 0.5 |
| Example 8 | 353 | 92.89 | 3.0 | 0.88 | 3.2 | 0.2 |
| Example 9 | 352 | 75.57 | 1.0 | 1.41 | 2.2 | 1.2 |
| Example 10 | 310 | 86.59 | 4.0 | 0.50 | 5.8 | 1.8 |
| Example 11 | 260 | 96.04 | 2.9 | 1.11 | 5.4 | 2.5 |
| Comparative example 1 | 20 | 99.96 | 41.4 | 0.19 | 386.0 | 345.0 |
| Comparative example 2 | 88 | 99.25 | 6.6 | 0.74 | 15.9 | 9.3 |
| Comparative example 3 | 141 | 94.19 | 2.6 | 1.09 | 8.6 | 6.0 |

As shown in Table 1, in all of Examples 1 to 11, since the collection net was used and the fiber structure had a three-dimensional shape having a hollow portion with a predetermined depth, not only the pressure loss is low but also the QF value can be increased. Further, even in a state in which 30 mg of NaCl has already been deposited, increase in the pressure loss can be suppressed, and thus a filter life can be prolonged.

As shown in Fig. 7, in a case where the fiber shape can be kept in the base portion, it is considered that fine particles can be captured also at the bottom portion and increase in the pressure loss can be suppressed.

On the other hand, in Comparative example 1, since fibers were directly collected on the suction collector without using the collection net, the fiber structure had a simple flat shape instead of a three-dimensional shape. The obtained fiber structure not only has low air permeability, but also has high pressure loss and a low QF value. In addition, since the increase rate of the pressure loss is high, a filter life cannot be prolonged.

In Comparative example 2, since the fiber aggregate having passed through the collection net quickly formed the bottom portion, the depth of the hollow portion could not be increased; as a result, the pressure loss is still high and the QF value is still low as compared to Examples. Further, as compared to Examples, since the increase rate of the pressure loss is high, a filter life cannot be prolonged.

In Comparative example 3, since the three-dimensional shape was controlled, the pressure loss is high and the QF value is low, while the depth of the hollow portion could not be increased. Therefore, in the state in which 30 mg of NaCl has already been deposited, increase in the pressure loss cannot be suppressed; as a result, a filter life is shortened.

INDUSTRIAL APPLICABILITY

The fiber structure of the present invention has a protrusion with a predetermined depth, and therefore the protrusion has a hollow portion with a sufficient depth. Thus, the fiber structure allows air permeation, has a three-dimensional shape, and has a large surface area. Accordingly, the fiber structure can be used for purposes in various fields such as industry, agriculture, and life materials, e.g., a filter, a wiper, a separator, a capacitor, a capacitor microphone, an ultrasonic diagnosis transducer, and a cushion material. Further, the fiber structure can also be used as a filtration filter in which the hollow portion of the protrusion is filled with a predetermined material (e.g., a granular material such as coffee or activated carbon).

In addition, since the fiber structure has the hollow portion with the predetermined depth, in particular, the fiber structure has a large surface area and has high collection performance for fine dust (particles) and enables prolonging of the life. Accordingly, the fiber structure is useful for various filters as follows: liquid filters in a pharmaceutical industry field, an electronics industry field, a food industry field, or an automobile industry field, filters in a home-appliance field (e.g., an air cleaner and an air conditioner), filters in an industry field (e.g., a bag filter, a prefilter, and a medium performance filter (a filter used for particles with a size of 0.4 to 0.7 $\mu$m, or the like)), and a cabin filter for an automobile, etc.

For the above applications, normally, a filter is pleated in order to enlarge the filter material surface area. The fiber structure of the present invention, however, has a predetermined hollow portion formed in the protrusion, so that the filter material surface area can be ensured, and thus the fiber structure can be used without being pleated.

Although the present invention has been described in connection with the preferred embodiments thereof, various changes and modifications can be made unless they depart from the scope of the present invention, and such changes and modifications are also included in the scope of the present invention.

[Reference Numerals]

10 ···· fiber structure
2 ···· opening portion
2a .... opening end
3 .... top face
4, 34 ···· side wall portion
5, 35 .... hollow portion
6, 36 .... bottom portion
8, 38 .... protrusion (swelling portion)
9 ···· support
20 ···· nozzle
21 ··· high-temperature gas
24 ···· molten polymer
26 .... fiber flow
29 .... suction collector

**Claims**

1. A fiber structure comprising:

   an opening portion; and
   a protrusion protruding from the opening portion,
   wherein the protrusion includes a side wall portion formed at a side surface, and a bottom portion formed at a bottom surface, and
   a depth (D) of a hollow portion defined between the opening portion and the bottom portion in the protrusion is 5 to 75 mm.

2. The fiber structure as claimed in claim 1, wherein an area B of an ideal conic solid calculated on the basis of the depth (D) of the hollow portion and an area (R) of the opening portion is 550 to 8000 mm$^2$.

3. The fiber structure as claimed in claim 1 or 2, wherein a ratio (B/R) of an area B of an ideal conic solid calculated on the basis of the depth (D) of the hollow portion and an area (R) of the opening portion, to the area (R) of the opening portion, is 1.1 or greater.

4. The fiber structure as claimed in any one of claims 1 to 3, wherein an average area (R) of the opening portion is 200 mm$^2$ or larger.

5. The fiber structure as claimed in any one of claims 1 to 4, wherein a ratio (Tb/Ta) of a thickness Tb of the bottom portion to a thickness Ta of the opening portion is 20 to 500.

6. The fiber structure as claimed in any one of claims 1 to 5, wherein a ratio (Tb/D) of a thickness Tb of the bottom portion to the depth D of the hollow portion is 2 or smaller.

7. The fiber structure as claimed in any one of claims 1 to 6, wherein a ratio (D/H) of the depth D of the hollow portion to a height H of the protrusion is 0.35 to 0.99.

8. The fiber structure as claimed in any one of claims 1 to 7, wherein the protrusion is formed by a swelling portion.

9. The fiber structure as claimed in any one of claims 1 to 8, further comprising a support formed by a filamentary body, wherein the opening portion is supported by the support.

10. The fiber structure as claimed in any one of claims 1 to 9, comprising a plurality of protrusions, wherein a number of the protrusions per 10000 mm$^2$ is 5 to 50 protrusions/10000 mm$^2$.

11. A three-dimensional filter comprising the fiber structure as claimed in any one of claims 1 to 10.

12. A filtration filter comprising a module in which an end of the fiber structure as claimed in any one of claims 1 to 10 is fixed to a casing.

Fig. 1

Fig. 2

Fig. 3

Fig. 4

Fig. 5

FLOW DIRECTION (MD)

W 2

W1

Fig. 6

Fig. 7

**EP 4 624 647 A1**

## INTERNATIONAL SEARCH REPORT

International application No.

**PCT/JP2023/041793**

**A. CLASSIFICATION OF SUBJECT MATTER**

*D04H 3/16*(2006.01)i; *B01D 39/16*(2006.01)i; *B32B 5/26*(2006.01)i
FI:　D04H3/16; B01D39/16 A; B32B5/26

According to International Patent Classification (IPC) or to both national classification and IPC

**B. FIELDS SEARCHED**

Minimum documentation searched (classification system followed by classification symbols)

D04H3/16; B01D39/16; B32B5/26

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2000-34642 A (TOOEI KK) 02 February 2000 (2000-02-02) examples 1-3, fig. 1, 2 | 1, 3, 7, 8 |
| Y | examples 1-3, fig. 1, 2 | 11, 12 |
| A | examples 1-3, fig. 1, 2 | 2, 4-6, 9, 10 |
| Y | JP 2011-094828 A (MITSUBISHI ELECTRIC CORP) 12 May 2011 (2011-05-12) paragraphs [0015]-[0016] | 11, 12 |
| A | paragraphs [0015]-[0016] | 1-10 |
| A | WO 2018/163879 A1 (ZUIKO CORPORATION) 13 September 2018 (2018-09-13) entire text, all drawings | 1-12 |
| A | JP 5179939 B2 (KURARAY KURAFLEX CO LTD) 10 April 2013 (2013-04-10) entire text, all drawings | 1-12 |
| A | WO 2021/010178 A1 (KURARAY KURAFLEX CO LTD) 21 January 2021 (2021-01-21) entire text, all drawings | 1-12 |

☐ Further documents are listed in the continuation of Box C.　　☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **29 January 2024** | **06 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

26

## INTERNATIONAL SEARCH REPORT
### Information on patent family members

International application No.

**PCT/JP2023/041793**

| Patent document cited in search report | | | Publication date (day/month/year) | Patent family member(s) | | | Publication date (day/month/year) |
|---|---|---|---|---|---|---|---|
| JP | 2000-34642 | A | 02 February 2000 | (Family: none) | | | |
| JP | 2011-094828 | A | 12 May 2011 | (Family: none) | | | |
| WO | 2018/163879 | A1 | 13 September 2018 | US | 2019/0368090 | A1 | |
| | | | | entire text, all drawings | | | |
| | | | | EP | 3594394 | A1 | |
| | | | | CN | 110312827 | A | |
| | | | | KR | 10-2019-0118584 | A | |
| | | | | BR | 112019016690 | A | |
| | | | | RU | 2732559 | C | |
| JP | 5179939 | B2 | 10 April 2013 | (Family: none) | | | |
| WO | 2021/010178 | A1 | 21 January 2021 | US | 2022/0136149 | A1 | |
| | | | | entire text, all drawings | | | |
| | | | | EP | 4001487 | A1 | |
| | | | | CN | 114126742 | A | |
| | | | | KR | 10-2022-0034116 | A | |
| | | | | TW | 202110616 | A | |

Form PCT/ISA/210 (patent family annex) (July 2022)

**EP 4 624 647 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022187546 A
- JP H544218 U
- JP 5179939 B